# EUROPEAN PATENT APPLICATION

(11) **EP 3 926 165 A1**
(43) Date of publication of application: **22.12.2021**
(21) Application number: 20180490.3
(22) Date of filing: 17.06.2020
(51) Int. Cl.: F03D 13/20, E04H 12/08

(54) **ALTERNATING SHIMMING FOR SUPPORT STRUCTURE FLANGES**

(71) Applicant: Siemens Gamesa Renewable Energy A/S, 7330 Brande (DK)
(72) Inventor: The designation of the inventor has not yet been filed
(74) Representative: Aspacher, Karl-Georg

(57) **Abstract**

The invention relates to a flange (700), wherein the flange (700) is configured for being mounted to a counter-flange with bolts (620) extending through a plurality of through holes (775, 776) distributed along a circumference of at least one of the flange (700) and the counter flange, wherein the flange (700) comprises a first ring-shaped contact surface (750), wherein the flange (700) comprises a ring-shaped discontinuous contact surface (760), wherein the first ring-shaped contact surface (750) and the ring-shaped discontinuous contact surface (760) are arranged such that the plurality of through holes (775, 776) is arranged between the first ring-shaped contact surface (750) and the ring-shaped discontinuous contact surface (760). Moreover, the invention relates to a support structure (112) comprising the flange (700) and a wind turbine (100) comprising the support structure (112). Finally, the invention relates to a method for mounting a flange to a counter flange.

## Description

The disclosure relates to a flange, a support structure section comprising the flange, in particular a support structure section for a wind turbine, and a method for mounting a flange.

Wind turbines may comprise a tower made of several support structures sections. Flange connections may be used to connect the individual support structure sections. Examples of such support structure sections are disclosed in DE 101 520 18 A1.

Flanges of wind turbine support structures, in particular connecting tower sections or between Monopiles (MPs) and Transition Pieces (TPs) are typically large diameter structures, which makes fulfilling fabrication tolerances very challenging. In particular flatness requirements, which are required in order to limit the size of flange gaps, are critical. Even small gaps between flanges may be critical for the fatigue life of bolts connecting the flanges.

Hence, there may be a need for a flange, a support structure section comprising such a flange, in particular for wind turbines, and a method for connecting the flange allowing for the reduction of gaps.

This need has been addressed with the subject-matter of the independent claims. Advantageous embodiments are described in the dependent claims.

It is proposed a flange, wherein the flange is configured for being mounted to a counter flange with bolts extending through a plurality of through holes distributed along a circumference of at least one of the flange and the counter flange, wherein the flange comprises a first ring-shaped contact surface, wherein the flange comprises a ring-shaped discontinuous contact surface, and wherein the first ring-shaped contact surface and the ring-shaped discontinuous contact surface are arranged such that the plurality of through holes is arranged between the first ring-shaped contact surface and the ring-shaped discontinuous contact surface.

The first ring-shaped contact surface may typically be a continuous contact surface. Thus, in the following it will also be referred to the first ring-shaped contact surface as continuous contact surface. However, it is also possible that the first ring-shaped contact surface is a discontinuous contact surface.

The ring-shaped continuous contact surface and the ring-shaped discontinuous contact surface may allow for providing defined contact between the flange and the counter flange.

Typically, the flange and the counter flange both comprise through holes and the bolts are provided separately. However, the bolts may also be fixed to one of the flange and the counter flange before assembling the flanges.

In an embodiment, an opening between contact sections of the discontinuous contact surface allows for inserting shims between the ring-shaped continuous contact surface and the counter flange in a semi-mounted state of the flange.

The shims may be used to provide contact between the flange and the counter flange in regions, where a gap is present due to unavoidable manufacturing tolerances. Well defined contacts may reduce fatigue of the bolts.

The semi-mounted state may refer to a state, in which the flange and the counter flange are arranged such that the bolts may be inserted into the through holes. It may also refer to a state, in which only some of the bolts are inserted into the through holes. At least some of the inserted bolts may be pre-tensioned in a semi-mounted state.

According to embodiments, the openings may have a height in a direction perpendicular to the ring-shaped discontinuous contact surface greater or equal than 2 mm, in particular greater or equal than 10 mm.

Said height may be sufficient for inserting shims between the ring-shaped continuous contact surface and the counter flange from a side of the ring-shape discontinuous contact surface.

According to embodiments, the height may be less than 75 mm, in particular, less than 50 mm to reduce the material required for forming the ring-shaped discontinuous contact surface.

According to embodiments, the flange may be an L-flange or a T-flange.

In an embodiment, the ring-shaped continuous contact surface may surround the ring-shaped discontinuous contact surface. Thus, in case the flange is a flange of a support structure section of a wind turbine tower, the shims may be inserted from the inside of the tower.

According to embodiments, the flange may comprise a body and a contact ring, wherein the contact ring comprises the ring-shaped continuous contact surface and/or the ring-shaped discontinuous contact surface. Typically, one contact ring comprises the ring-shaped continuous contact surface and another contact ring comprises the ring-shaped discontinuous contact surface. However, it may also be possible to provide both the ring-shaped continuous contact surface and the ring-shaped discontinuous contact surface within a common contact ring, which has holes to allow bolts to pass through.

The contact ring and the body may be formed as one piece. Alternatively, the contact ring may be provided separately and maybe glued to the body. In other embodiments, the contact ring may be welded to the body. It is also possible that the contact ring is fixed to the body using bolts, for example by means of counter-sunk bolts.

In addition, it is provided a support structure section comprising one of the aforementioned flanges and a wind turbine comprising such a support structure section.

Furthermore, it is proposed a method for mounting a flange according to one of the aforementioned embodiments to a counter flange. The method comprises inserting bolts through at least some of the through holes, preloading the inserted bolts with a first preload, identifying one or more gaps between the ring-shaped continuous contact surface and the counter flange, and inserting one or more shim(s) into at least one of the one or more gaps through an opening between to contact sections of the ring-shaped discontinuous contact surface.

The shims may have predetermined heights. Thus, for a given gap, one or more shims may be inserted.

The bolts may be preloaded by applying a well-defined torque or by using pre-tensioning techniques.

In an embodiment, the first preload corresponds to more than 5 percent, in particular more than 10 percent, of their nominal final tensile load.

Embodiments of the method may prescribe that the method comprises before inserting the shim, preloading at least some of the inserted bolts with a second preload after identifying the one or more gaps, and identifying one or more gaps between the ring-shaped continuous contact surface and the counter flange.

Thus, it is proposed a method for mounting a flange according to one of the aforementioned embodiments to a counter flange, wherein the method comprises inserting bolts through at least some of the through holes, preloading the inserted bolts with a first preload, identifying one or more gaps between the ring-shaped continuous contact surface and the counter flange, preloading at least some of the inserted bolts with a second preload after identifying one or more gaps, in particular long gaps, between the ring-shaped continuous contact surface and the counter flange. Thereafter, one or more (remaining) gaps may be identified and the method may prescribe inserting a shim into at least one of the one or more (remaining) gaps through an opening between to contact sections of the ring-shaped discontinuous contact surface.

Preloading at least some of the inserted bolts with a second preload may allow for closing some of the gaps before inserting shims. Thus, unnecessary shimming may be avoided.

In an embodiment, the through holes of the flange are arranged circularly.

Inserting bolts may comprise inserting bolts at least every 30°. According to further embodiments, inserting bolts comprises inserting bolts through through holes provided between the ring-shaped continuous contact surface and a contact section of the ring-shaped discontinuous contact surface.

Thus, an opening may remain between the other parts of the discontinuous contact surface for inserting shims.

The invention may be better understood by reference to the drawings. The drawings are incorporated into, and form part of, the specification. They illustrate embodiments of the present disclosure and, along with the description, serve to explain the principles of the disclosure. The drawings are only illustrative of certain embodiments and do not limit the disclosure. In the drawings:
- FIG. 1: shows a wind turbine;
- FIG. 2 - 6: show several flange connections;
- FIG. 7: shows the bottom view of a flange;
- FIG. 8: shows above cross-section of the flange according to FIG. 7;
- FIG. 9: shows another cross-section of the flange according to FIG. 7; and
- FIG. 10 - 13: show a section of a flange in different states.

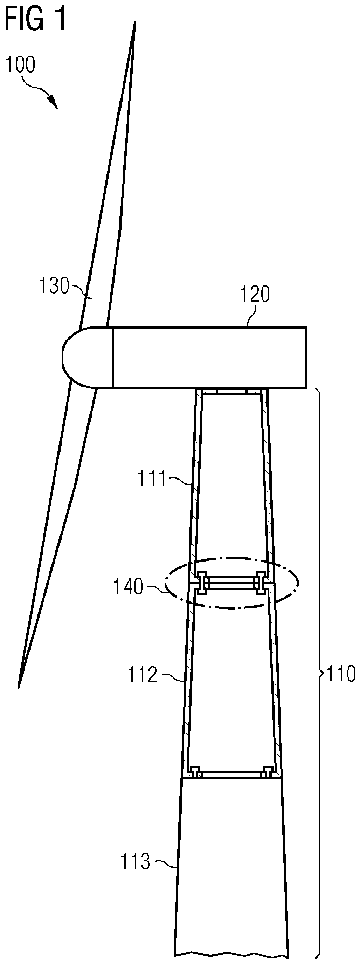

FIG. 1 shows a wind turbine 100 comprising a tower 110 supporting a nacelle 120 which supports a wind turbine rotor 130. The wind turbine tower comprises several support structures sections 111, 112, 113, which are connected to each other using flange connections 140.

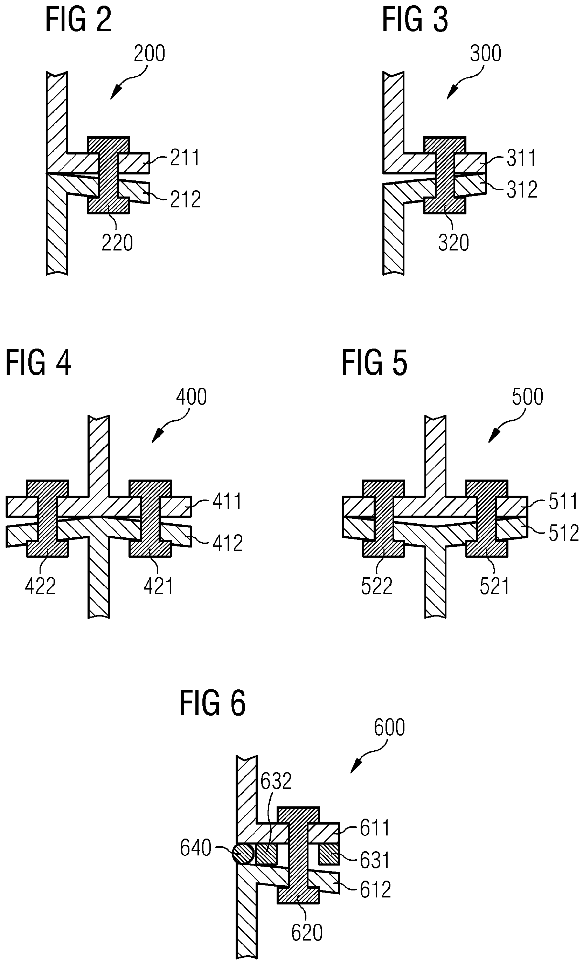

Large diameter structures up to 8 m and above make fulfilling fabrication tolerances very challenging. In particular, flatness requirements, which are required in order to limit the size of flange gaps are very difficult to comply with. FIG. 2 - 6 illustrate several types of flange gaps, which may arise in practice.

FIG. 2 shows a flange connection 200 formed by a flange 211 and a counter flange 212. The two flanges 211 and 212 are connected to each other using bolts 220. A gap is observable between the flange 211 and the counter flange 212 at a side opposite to the part of the flange 211 extending in the same direction as the bolt 220. The flanges 211 and 212 may be called L-flanges. The part of the flange 211 perpendicular to the bolt 220 may be directed to the center of the flange as shown in FIG. 1, for example. However, it is also conceivable that said part extends to the outside of the flange.

FIG. 3 shows another flange connection 300 formed by a flange 311 and a counter flange 312, which are connected by bolts 320. Here, the gap exists between the sections of the flange 311 and the counter flange 312 which extent parallel to the bolts 320.

FIG. 4 shows a further flange connection 400. The flanges 411 and 412 may be considered as T-flanges. Two groups of bolts 421 and 422 are provided for connecting the flanges. Gaps may be observed at parts of the flanges 411 and 412 facing away from the part of the flanges 411, 412, extending parallel to the bolt 421 and 422.

FIG. 5 shows another T-flange connection 500 comprising flange 411 and counter flange 512. Two bolts, 521 and 522, are provided for establishing the connection. Here, a gap exists in the middle of the connection. The lack of contact in the center region may lead to fluctuating loads on the bolts when forces perpendicular to the bolt extensions are applied to the support structure of which the flange 411 forms a part.

FIG. 6 shows a further flange connection 600. The flange connection comprises a flange 611 and a counter flange 612. The flange 611 includes two contact rings 631 and 632 which provide a ring-formed discontinuous contact surface and ring-formed continuous contact surface. Moreover, FIG. 6 shows that the flange connection 600 may comprise a sealing 640, which may prevent moisture upon entering the flange connection from the left side.

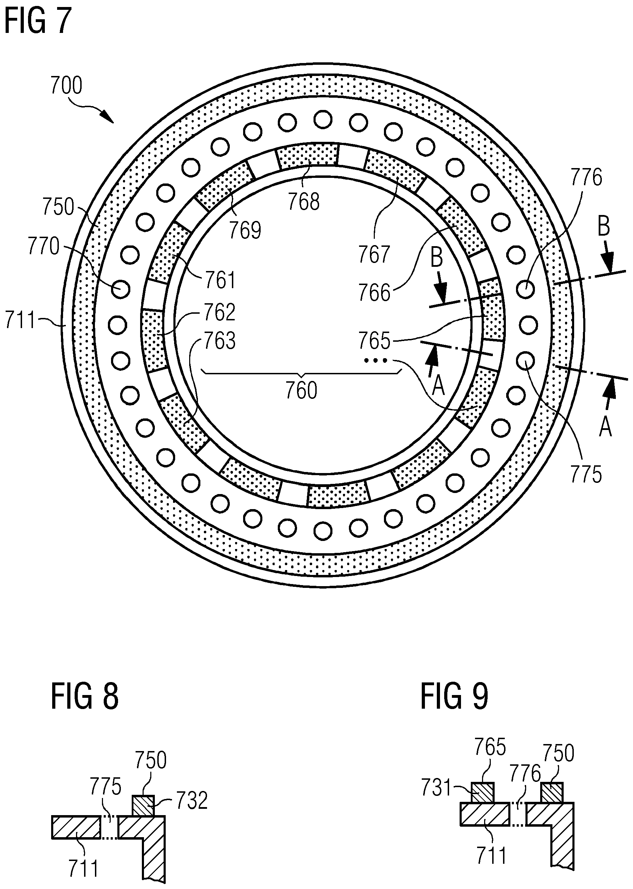

FIG. 7 shows a bottom view of a flange 700. The flange comprises a base 711, a ring-shaped continuous contact surface 750 and a ring-shaped discontinuous contact surface 760. The ring-shaped discontinuous contact surface 760 comprises several contact sections 761 - 769.

Between the ring-shaped continuous contact surface 750 and the ring-shaped discontinuous contact surface 760 through holes 770 are provided.

FIG. 8 shows a cross-section of the flange 700 along the line A-A of FIG. 7. FIG. 8 shows the through hole 775 formed in the base 711 and a contact ring 732 welded to the base 711, wherein the contact ring 732 provides the continuous contact surface 750.

FIG. 9 shows a cross-section of the flange 700 along the line B-B shown in FIG. 7. FIG. 9 illustrates that a further contact ring 731 may provide the discontinuous contact surface 765. Moreover, the through hole 776 is shown.

Although the flange 700 is shown with the contact ring 731 and the contact ring 732 facing upwards in the FIG. 7 - 9, it may be preferred that the upper flange of a flange connection is provided with the contact ring 731 and/or 732. Thus, an essentially even surface may be provided at the counter-flange, which may facilitate moving shims in the gaps.

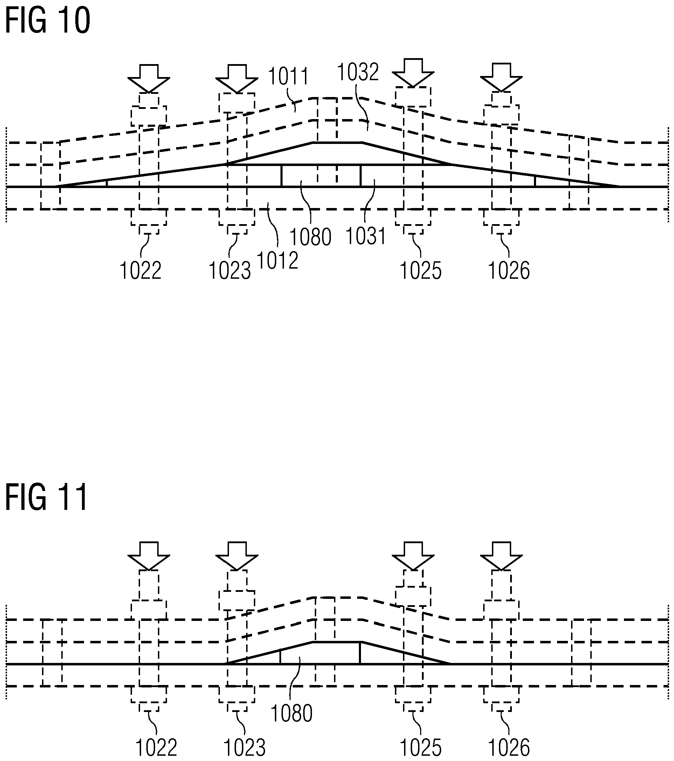

FIG. 10 - 13 illustrate a method for establishing a flange connection. The flange is shown from the outside. The flange may comprise a base 1011 and a contact ring 1032 providing the outer ring-shaped continuous contact surface. The flange may be connected to a counter flange 1012. As shown in FIG. 10, a gap may exist after the two flanges have been brought into contact with one another and bolts 1022, 1023, 1025 and 1026 have been inserted into through holes at a position between contact sections of the contact ring 1031 providing the ring-shaped discontinuous contact surface (with respect to FIG. 7, this may correspond to inserting bolts into the hole 776) and the counter flange 1012. Between the protrusions of the contact ring providing the ring-shaped discontinuous contact surface, an opening 1080 may exist. As shown in FIG. 10, unavoidable manufacturing tolerances may lead to a long gap between the two flanges. This gap may even exist, when the bolts 1022, 1023, 1025 and 1026 have been pre-tensioned to a first pretension value.

In an embodiment of the proposed method, some bolts, for example the bolts 1022, 1023, 1025 and 1026, may be tensioned to a higher second pretension value. As shown in FIG. 11, this may close the long gap such that only a small gap remains.

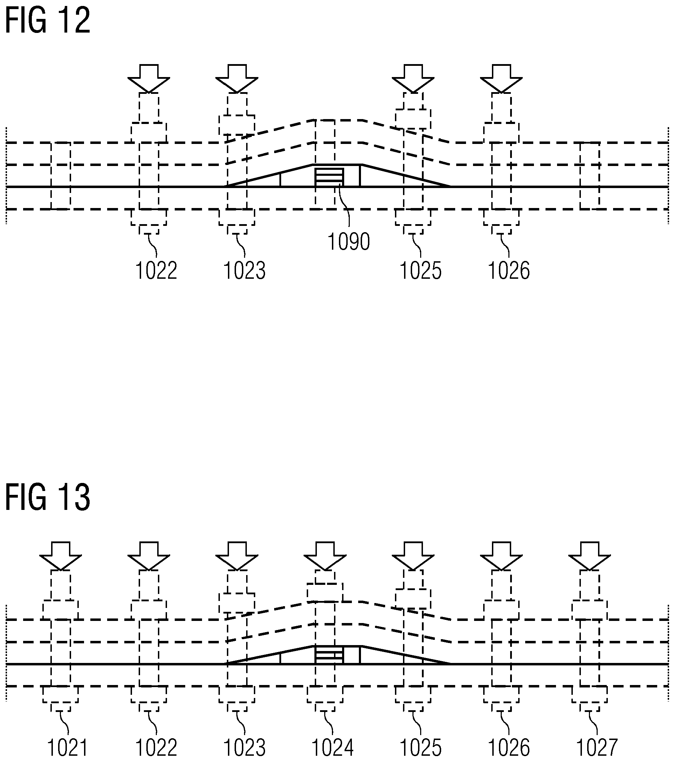

The opening 1080 may allow for inserting a shim 1090 from the inside of the flange as shown in FIG. 12.

Thus, as shown in FIG. 13, after tensioning all the bolts 1021 - 1027, a contact between the two flanges may also be present at the position corresponding to bolt 1024. Thus, well-defined contact surfaces may exist between the two flanges using the prescribed method. This may substantially increase the fatigue life of the flange connection provided.

## Claims

1. Flange (700),
wherein the flange (700) is configured for being mounted to a counter-flange with bolts (620) extending through a plurality of through holes (775, 776) distributed along a circumference of at least one of the flange (700) and the counter flange,
wherein the flange (700) comprises a first ring-shaped contact surface (750),
wherein the flange (700) comprises a ring-shaped discontinuous contact surface (760),
wherein the first ring-shaped contact surface (750) and the ring-shaped discontinuous contact surface (760) are arranged such that the plurality of through holes (775, 776) is arranged between the first ring-shaped contact surface (750) and the ring-shaped discontinuous contact surface (760).

2. Flange (700) according to claim 1,
wherein openings (1080) between contact sections (761) of the ring-shaped discontinuous contact surface (760) allow for inserting shims (1090) between the first ring-shaped contact surface (750) and the counter-flange in a semi-mounted state of the flange.

3. Flange (700) according to claim 2,
wherein the openings (1080) have a height in a direction perpendicular to the ring-shaped discontinuous contact surface (760) greater or equal than 2 mm, in particular greater or equal than 10 mm.

4. Flange (700) according to any one of claims 1 to 3,
wherein the flange is an L-flange or a T-flange.

5. Flange (700) according to any one of claims 1 to 4,
wherein the first ring-shaped contact surface (750) surrounds the ring-shaped discontinuous contact surface (760).

6. Flange (700) according to any one of claims 1 to 5,
wherein the flange (700) comprises
- a body (711),
- a contact ring (731, 732),
wherein the contact ring (731, 732) comprises the first ring-shaped contact surface (750) and/or the ring-shaped discontinuous contact surface (760).

7. Flange (700) according to any one of the preceding claims,
wherein the contact ring (731, 732) and the body (711) are formed as one piece, or
wherein the contact ring (731, 732) is glued to the body (711), or
wherein the contact ring (731, 732) is welded to the body (711), or
wherein the contact ring (731, 732) is fixed to the body (711) using bolts.

8. Support structure section (112) comprising a flange (700) according to anyone claims 1 to 7.

9. Wind turbine (100) comprising a support structure section (112) according to claim 8.

10. Method for mounting a flange (700) according to any one of claims 1 to 7 to a counter-flange, wherein the method comprises
- inserting bolts (1022, 1023, 1025, 1026) through at least some of the through holes,
- pre-loading the inserted bolts with a first pre-load, identifying one or more gaps between the first ring-shaped contact surface and the counter-flange (1012), and
- inserting one or more shim(s) (1090) into at least one of the one or more gaps through an opening (1080) between two contact sections of the ring-shaped discontinuous contact surface.

11. Method according to claim 10,
wherein the first pre-load corresponds to more than 5 percent, in particular more than 10 percent, of their nominal final tensile load.

12. Method according to claim 10 or 11, wherein the method comprises before inserting the shim
- pre-loading at least some of the inserted bolts (1022, 1023, 1025, 1026) with a second pre-load after identifying the one or more gaps, and
- identifying one or more gaps between the first ring-shaped contact surface and the counter flange (1012).

13. Method according to any one of claims 10 to 12,
wherein the through holes are arranged circularly.

14. Method for mounting a flange according to claim 13,
wherein inserting bolts comprises inserting bolts at least every 30°.

15. Method for mounting a flange according to any one of claims 10 to 14,
wherein inserting bolts ((1022, 1023, 1025, 1026) comprises inserting bolts through holes provided between the first ring-shaped contact surface and a contact section of the ring-shaped discontinuous contact surface.
